# EUROPEAN PATENT APPLICATION

(11) **EP 2 317 438 A2**
(43) Date of publication of application: **04.05.2011**
(21) Application number: 10176157.5
(22) Date of filing: 10.09.2010
(51) Int. Cl.: G06F 11/07

(54) **Portable electronic apparatus, IC card and method of controlling portable electronic apparatus**

(30) Priority: 11.09.2009 JP 2009210912; 03.03.2010 JP 2010046980; 18.03.2010 JP 2010063323
(71) Applicant: Kabushiki Kaisha Toshiba, Tokyo 105-8001 (JP)
(72) Inventor: Ishibashi, Norio, Tokyo 105-8001 (JP)
(74) Representative: HOFFMANN EITLE

(57) **Abstract**

According to one embodiment, a portable electronic apparatus (1) includes a communicating unit (14), an executing unit (S13, S113, S207), a generating unit (S17, S117, S209), a storing unit (13, 13a, 13a', S18, S119-S122, S210-S212), a first processing unit (S19 and S16, S123 and S116, S213 and S214), and a second processing unit (S20 and S16, S127 and S116, S223 and S214). The generating unit generates additional information associated with a result of the command processing executed by the executing unit. A first processing unit transmits a response containing the result of the command processing by the executing unit and information indicating presence of the additional information to the external apparatus, if the storing unit stores the additional information generated by the generating unit. A second processing unit transmits the additional information stored in the storing unit to the external apparatus, if receiving a command of requesting the additional information from the external apparatus.

## Description

### FIELD

Embodiments described herein relate generally to a portable electronic apparatus, an IC card and a method of controlling the portable electronic apparatus.

### BACKGROUND

Conventionally, an IC card as portable electronic apparatus was operated to receive a command from a high-order apparatus, to interpret the received command for executing its processing, and to return a processing result as a response to the high-order apparatus without operating on its own. In the IC card processing system, there is a need of strictly defining a format of the command to be supplied from the high-order apparatus to the IC card and a format of the response to be returned from the IC card to the high-order apparatus. For example, a system (command system) for a command format and a response format is defined in ISO/IEC7816 as international standard to be applied to typical IC cards. Since the command system is predefined for the IC card, a degree of freedom for the response is actually less.

For example, a response to a writing command indicates, as a processing result for the command, information such as "normal ending", "hardware error", "no authority to access" or "no file." However, a "status word" may not be enough for the information indicating the processing result for the command. The high-order apparatus needs to grasp detailed information on error's contents in order to efficiently perform the processings after error occurrence.

For example, a response to the processing of the writing command during error occurrence needs not only the fact that a writing error has occurred but also detailed information on the error's contents such as "error at address of OOOOOOOO" or "writing fails since logical channel number O is already occupying file." However, in the current IC card processing system, the information indicating detailed error's contents cannot be provided from the IC card to the high-order apparatus by other than the status word.

A command system for returning a response only by the status word to a writing command is typical. In other words, in order to add information (response data) indicating detailed error's contents by other than the status word to the response to the writing command, the format itself of the response to the writing command needs to be changed. In order to change the format of the response to a specific command, the entire command system needs to be largely changed. Such a change in the entire command system is regarded as not practical.

### BRIEF DESCRIPTION OF THE DRAWINGS

FIG. 1 is a block diagram schematically showing a hardware configuration of an IC card as portable electronic apparatus according to an embodiment;
FIG. 2 is a diagram showing a file configuration example of data to be stored in a nonvolatile memory;
FIG. 3 is a schematic diagram for explaining a software configuration of the IC card;
FIG. 4 is a diagram showing an example of a command system to be used for an IC card processing system;
FIG. 5 is a flowchart for explaining a flow of processings for a command in an IC card in a first processing example;
FIG. 6 is a sequence diagram showing the first processing example when an error occurs in a writing command processing;
FIG. 7 is a diagram showing an example of an access state to each file by multiple logical channels;
FIG. 8 is a diagram showing a configuration example of an additional information table in a second processing example;
FIG. 9 is a flowchart for explaining a flow of processings for a command in an IC card in the second processing example;
FIG. 10 is a sequence diagram showing the second processing example when the latest additional information is read;
FIG. 11 is a sequence diagram showing the second processing example when past additional information is read after other command is executed;
FIG. 12 is a diagram showing a configuration example of an additional information table in a third processing example;
FIG. 13 is a flowchart for explaining a flow of processings for a command in an IC card in the third processing example;
FIG. 14 is a sequence diagram showing the third processing example when the latest additional information is read; and
FIG. 15 is a sequence diagram showing the third processing example when past additional information is read after other command is executed.

### DETAILED DESCRIPTION

In general, according to one embodiment, a portable electronic apparatus includes a communicating unit, an executing unit, a generating unit, a storing unit, a first processing unit, and a second processing unit. The generating unit generates additional information associated with a result of the command processing executed by the executing unit. A first processing unit transmits a response containing the result of the command processing by the executing unit and information indicating presence of the additional information to the external apparatus, if the storing unit stores the additional information generated by the generating unit. A second processing unit transmits the additional information stored in the storing unit to the external apparatus, if receiving a command of requesting the additional information from the external apparatus.

The embodiment will be described below with reference to the accompanying drawings.

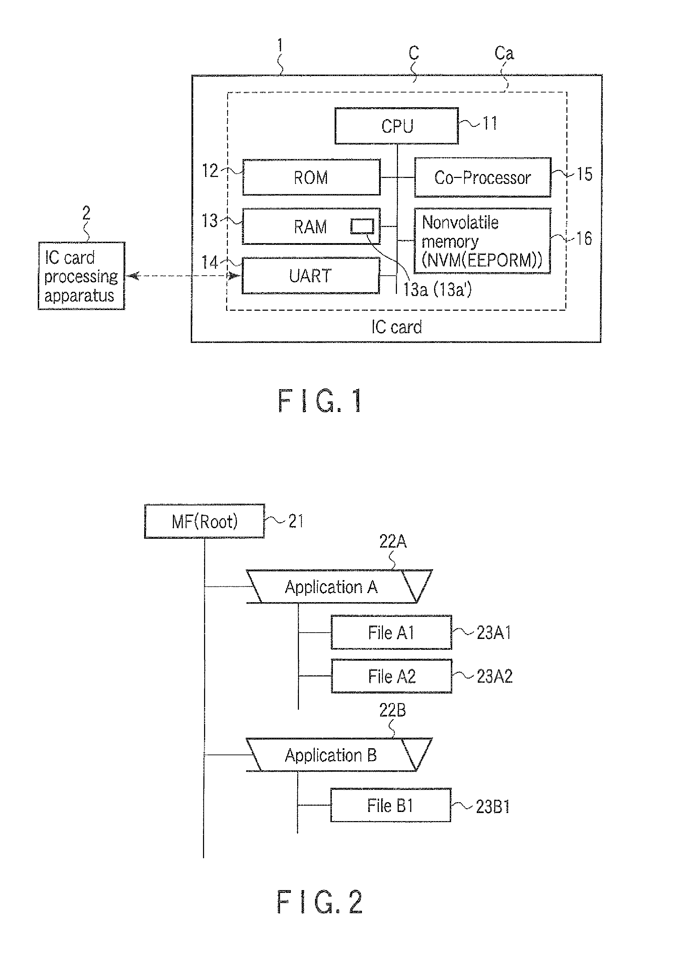

FIG. 1 schematically shows a hardware configuration of an IC card 1 as portable electronic apparatus according to the embodiment.

The IC card 1 executes a processing in response to a command from an IC card processing apparatus 2 as high-order apparatus. In other words, the IC card 1 and the IC card processing apparatus 2 constitute an IC card processing system as shown in FIG. 1.

As shown in FIG. 1, the IC card 1 comprises a CPU (Central Processing Unit) 11, a ROM (Read Only Memory) 12, a RAM (Random Access Memory) 13, a communicating unit (UARL) 14, a cc-processor 15 and a nonvolatile memory (NV (EEPROM)) 16.

The CPU 11, the ROM 12, the RAM 13, the communicating unit 14, the co-processor 15 and the nonvolatile memory 16 are configured into a module Ca which is integrally formed by IC chip and others. The module Ca is embedded inside a casing (main body) C forming the IC card 1. In other words, the IC card 1 is configured with the casing C having the module Ca embedded therein.

The IC card 1 is activated (enters an operable state) when supplied with power from the IC card processing apparatus 2 as high-order apparatus, and operates in response to a command from the IC card processing apparatus 2. The IC card processing apparatus 2 is configured with a personal computer connected with a reader/writer adapted to a communicating system of the IC card 1. For example, a controlling unit (not shown) executes an application program so that the IC card processing apparatus 2 realizes the functions of transmitting a command to the IC card 1 and receiving a response from the IC card 1.

The CPU 11 is configured to control the entire IC card 1 and to govern the data processings. The CPU 11 operates based on control programs to perform various processings. The ROM 12 is a nonvolatile memory having control programs and control data previously stored therein. The RAM 13 is a volatile memory functioning as a working memory.

The RAM 13 is provided with an additional information table 13a (13a'). The additional information table 13a (13a') stores therein multiple items of additional information (detailed information) indicating a command processing result and others. The additional information stored in the additional information table 13a (13a') indicates more detailed processing contents than can be transmitted by a command response. For example, if an error occurs in a command execution result, information indicating detailed error's contents is stored as additional information (detailed information) in the additional information table 13a (13a'). The maximum number of items of additional information to be stored may be set in the additional information table 13a (13a'). If the additional information table 13a (13a') is provided in the RAM 13, when the IC card 1 is deactivated, the additional information stored in the additional information table 13a (13a') is cleared.

The communicating unit 14 functions as communicating means and is configured to control data communication with the IC card processing apparatus 2 as high-order apparatus. The communicating unit 14 also functions as means for receiving power for operation of the IC card 1. The co-processor 15 is configured to assist calculations such as encoding and decoding. The nonvolatile memory 16 is a rewritable nonvolatile memory configured to store therein various items of data or applications (application programs). The additional information table 13a may be provided in the nonvolatile memory 16. If the additional information table 13a is provided in the nonvolatile memory 16, even if the IC card 1 is deactivated, the additional information stored in the additional information table 13a remains held.

The communicating unit 14 is configured according to the communicating system of the IC card 1. For example, when the communicating system of the IC card 1 is a contact-type communicating system, the communicating unit 14 is configured with a contacting unit configured to physically contact a contacting unit of the IC card processing apparatus 2 as high-order apparatus. In this case, the IC card 1 receives power from the IC card processing apparatus 2 by the communicating unit 14 physically contacting the IC card processing apparatus 2. in other words, when the IC card 1 is a contact-type IC card, the IC card 1 is activated in response to an operational power supply and an operational clock from the IC card processing apparatus 2 via the contacting unit as the communicating unit 14.

When the communicating system of the IC card 1 is a noncontact-type (wireless) communicating system, the communicating unit 14 is configured with an antenna for exchanging a radio wave and a communication controlling unit configured to control communication. In this case, the IC card 1 generates an operational power supply and an operational clock by a power supply (not shown) based on a radio wave received by the communicating unit 14. In other words, when the IC card 1 is a noncontact-type IC card, the IC card 1 receives a radio wave from the IC card processing apparatus 2 via the antennal as communicating unit 14 and the communication controlling unit, and generates the operational power supply and the operational clock by the power supply (not shown) from the radio wave, thereby being activated.

A configuration of data to be stored in the nonvolatile memory 16 will be described below.

The nonvolatile memory 16 stores therein various items of data in a file configuration defined in ISO/IEC7816, for example. For example, the nonvolatile memory 16 stores therein files (EF: Elementary File) as data file managed in a multilayered configuration (tree configuration) and files (DF: Dedicated File) as data folder.

FIG. 2 is a diagram showing a configuration example of files stored in the nonvolatile memory 16.

In the example shown in FIG. 2, a file (MF: Master File) 21 as master file is at the top. A DF (application A) 22A as folder and a OF (2-application B) 22B as folder are provided under the MF 21. An EF (file A1) 23A1 and an EF (file A2) 23A2 to be used for data storage are provided under the DF (application A) 22A. Further, an EF (file B1) 23B1 to be used for data storage is provided under the DF (application B) 22B. Various items of data are stored in the EFs as data file in the file configuration.

A software configuration of the IC card 1 will be described below.

As described above, the CPU 11 executes the programs stored in the ROM 12 or the nonvolatile memory 16 so that the IC card 1 realizes various processings. In other words, the IC card 1 controls the ROM 12, the RAM 13, the nonvolatile memory 16, the communicating unit 14 or the co-processor 15 by the software executed by the CPU 11, thereby realizing various processings.

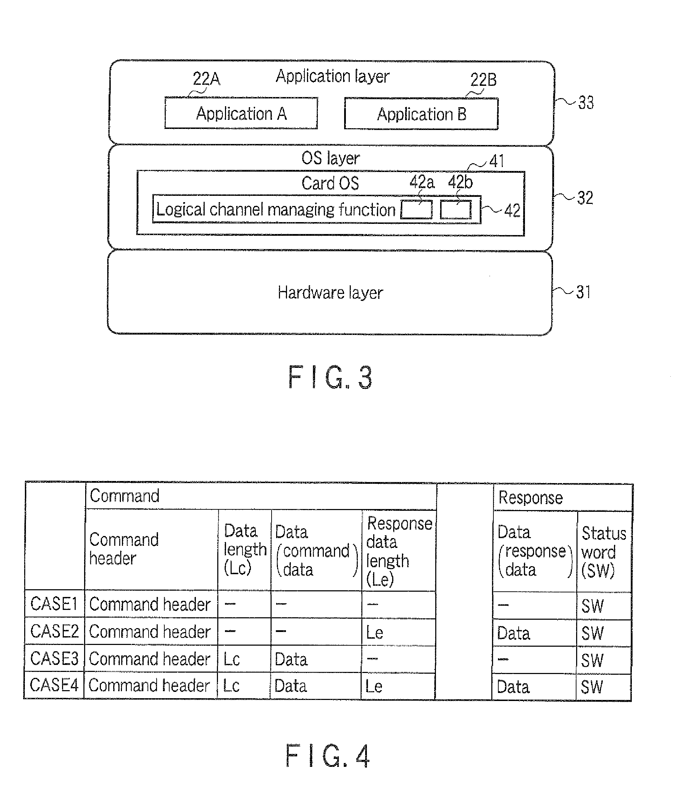

FIG. 3 is a diagram schematically showing the software configuration of the IC card 1.

The software of the IC card 1 is configured with a hardware (H/W) layer 31, an OS (operating system) layer 32, and an application layer 33. As shown in FIG. 3, the IC card 1 is configured such that the application layer 33 is positioned at the top and the OS layer 32 is positioned over the H/W layer 31.

The H/W layer 31 is configured with the hardware such as the PCU 11, the ROM 12, the RAM 13, the communicating unit 14, the co-processor 15 and the nonvolatile memory 16. Each hardware in the H/W layer 31 executes a processing in response to a processing request from the OS layer 32 and transmits the executed processing result to the OS layer 32.

The OS layer 32 comprises a card OS (operating system) 41 as program for executing basic control in the IC card 1. The OS layer 32 may comprise modules such as environment setting module and application interface group. The software as the card OS 41 is a program for controlling basic operations of the IC card, controlling each hardware in the H/W layer 31 and operating in response to the information such as processing result from each hardware. The software as the card OS 41 is previously stored in the nonvolatile memory within the IC card, and is stored in the ROM 12, for example.

The card OS 41 comprises a logical channel managing function 42 in addition to the basic function of controlling each hardware in the H/W layer for realizing the basic operations of the IC card 1. A logical channel is directed for managing a logical channel for accessing each file or each application inside the nonvolatile memory 16. For example, when communication is made in multiple communicating systems, a logical channel is assigned per communicating system. The control by the logical channels enables the IC card 1 to process multiple series of command group per channel. For example, a command processing is performed in the first channel for application A while a command processing is performed in the second channel for application B.

The logical channel managing function 42 manages the aforementioned logical channels. In other words, the logical channel managing function 42 controls opening/closing of the logical channels, assigns the logical channels to the application programs, and uses a channel management table 42a to manage the order in which each logical channel accesses a file or application. Information stored in the channel management table 42a is updated by a table updating function 42b according to a change in file or application program set as current in each logical channel.

The application layer 33 is configured with various applications (application A, application B, ...) as programs for realizing various processings. The software as each application is made of programs and data for realizing various processings conforming to an operation form of the IC card 1. The software as the application is previously stored in the nonvolatile memory 16 inside the IC card 1 or is downloaded from an external apparatus as needed and stored in the nonvolatile memory 16 inside the IC card 1.

In other words, each hardware in the H/W layer 31 is controlled by the card OS 41 in the OS layer 32.

The card OS 41 in the OS layer 32 controls the operations of each hardware in response to a request from each application in the application layer 33. The processing result and others by each hardware in the H/W layer 31 are supplied to the applications via the card OS 41 in the OS layer 32. For example, a command from an external apparatus is received by hardware in the H/W layer 31 and is supplied to the card OS 41 in the OS layer 32. The card OS 41 selectively supplies the command received in the H/W layer 31 to a specific application in the application layer 33.

For example, when the H/W layer 31 receives an application selecting command from an external apparatus, the card OS 41 sets an application designated by the application selecting command from the application layer 33 in a current state. When the H/W layer 31 receives a command from an external apparatus in this state, the card OS 41 supplies the command to the application in the current state. Thus, each application in the application layer 33 executes a processing corresponding to the command supplied from the card OS 41 in the OS layer 32. In other words, the card OS 41 designates the application in the current state (which will be referred to as current application below) and supplies a command to the current application.

A command system used for the IC card processing system will be described below.

As stated above, the IC card 1 executes a processing corresponding to a command from the IC card processing apparatus 2 and transmits a processing result as response to the IC card processing apparatus 2. For such a system, a command system for realizing the operations based on command and response needs to be previously defined. In other words, the IC card processing system is realized in the predefined command system.

FIG. 4 is a diagram showing an example of a command system used for the IC card processing system. The command system shown in FIG. 4 assumes to be defined in ISO/IEC7816 as IC card international standard. In the example shown in FIG. 4, a format of a response, which corresponds to a format of a command, to be output by the IC card is previously defined as the command system. In the example shown in FIG. 4, four patterns are defined.

In CASE1 shown in FIG. 4, the IC card is defined to return a response made only of status word to a command made only of command header. The command header is made of information indicating a command type and a processing parameter. The status word indicates a processing result by predetermined code information (number). The command corresponding to CASE1 is configured to request the IC card to perform a processing having no need to supply data, and to receive only an indication as to whether the processing has been successfully performed from the IC card.

In CASE2 shown in FIG. 4, the IC card is defined to return a response made of response data and status word to a command made of command header and response data length (Le). The response data length is information designating a size of the response data to be transmitted by the IC card for the response to the command. The command corresponding to CASE2 is directed for requesting the IC card to perform a processing having no need to supply data and capable of obtaining data as the processing result, and receiving the data (response data) as the processing result from the IC card. For example, a command of requesting the IC card to read the data stored in the memory is contained in the command of CASE2.

In CASE3 shown in FIG. 4, the IC card is defined to return a response made only of status word to a command made of command header, data length (Lc) and command data. The command data indicates a size designated by the data length. The command corresponding to CASE3 is directed for requesting the IC card to perform a processing using the supplied command data, and receiving the status word indicating whether the processing has been successfully performed from the IC card. For example, a command of requesting the IC card to write command data is contained in the command of CASE3.

In CASE4 shown in FIG. 4, the IC card is defined to return a response made of response data and status word to a command made of command header, data length (Lc), command data and response data length (Le). The command corresponding to CASE4 is directed for requesting the IC card to perform a processing using the command data, and receiving the response data as the processing result from the IC. card.

Processings in the IC card when an error occurs in a processing corresponding to a command will be described below.

Hereinafter, the present embodiment is based on the premise that the IC card 1 operates in the command system defined in ISO as shown in FIG. 4. In the command system as shown in FIG. 4, the response data other than the status word cannot be transmitted to the command in which the response data length is not set. The status word has the data size (such as 2 bytes) defined and is directed for notifying the result of the command processing by predetermined code information.

In other words, various situations occurring in the processing for each command cannot be notified in detail only by the status word permitted as the response to the command of CASE1 or CASE3 described above. For example, when a writing error occurs in the processing for the writing command of CASE3, the IC card 1 allows only the status word indicating that a writing error has occurred to be notified as the response to the writing command, but cannot notify detailed contents of the writing error (error's cause, memory address where the error has occurred, and the like).

Even for the command of CASE2 or CASE4, the response data transmittable as the response to the command has to be defined data. This means that data other than the data designated by the command cannot be used as the response data in order to keep processing consistency in the entire system. For example, the response data as the response to a reading command of CASE2 must be designated read data and other data cannot be used as the response data.

The above command system is previously defined and should be complied. The IC card 1 can provide information such as detailed contents of the error to the high-order apparatus while operating according to the above command system. In other words, the IC card 1 has a function of, when an error occurs in the processing for the command from the high-order apparatus, generating additional information indicating detailed contents of the error and holding it in the memory. The IC card 1 transmits the additional information held in the memory in response to a request (command) from the high-order apparatus.

Examples of the command processing in the IC card 1 for realizing the above operations will be described below.

A first processing example will be first described.

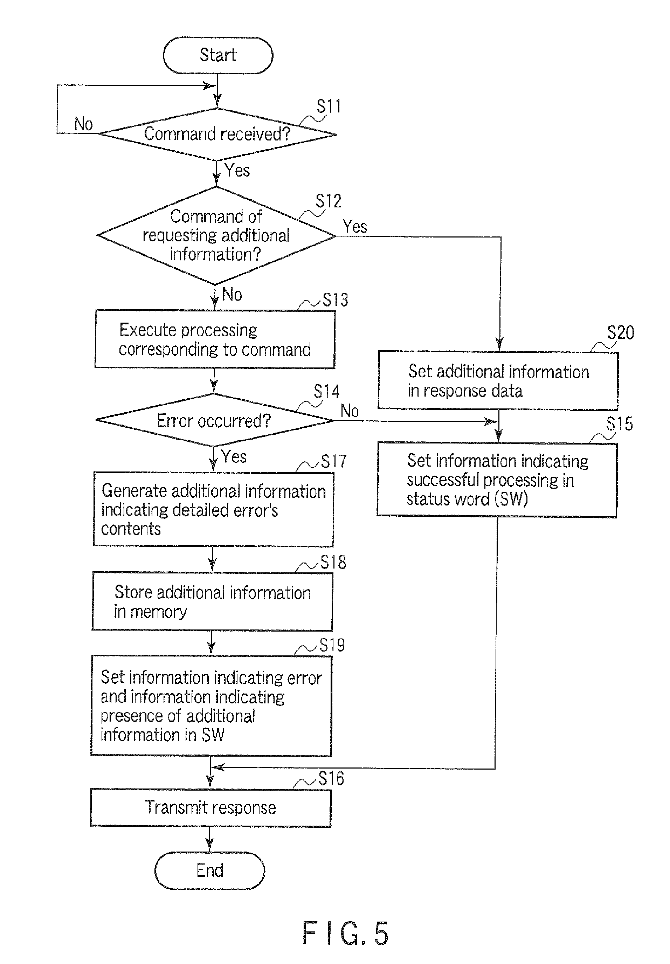

FIG. 5 is a flowchart for explaining a flow of the first processing example for a command in the IC card 1.

The powered-on IC card 1 can receive a command from the IC card processing apparatus 2 by the communicating unit 14 in the standby state (step S11). When the communicating unit 14 receives a command from the IC card processing apparatus 2 in this state (step S11, YES), the CPU 11 of the IC card 1 determines whether the received command is a command of requesting additional information (step S12). The command of requesting additional information is a predefined special command. For example, a GET RESPONSE command (GET RESPONSE Command of CASF2 defined in ISO) received immediately after the response, in which the status word indicating the presence of additional information is set, is transmitted may be defined as the special command of requesting additional information.

When determining, based on the above determination, that the received command is not the command of requesting additional information (step S12, NO), the CPU 11 performs a processing corresponding to the received command (command processing) (step S13). The CPU 11 performs the command processing by determining the processing contents designated by the command header of the command.

When successfully performing the command processing (step S14, NO), the CPU 11 generates a response, in which information (code information) indicating the success of the processing is set, in the status word (SW) (step S15), and transmits the generated response to the IC card processing apparatus 2 (step S16).

When an error occurs in the command processing (step S14, YES), the CPU 11 generates additional information indicating detailed contents of the error (step S17). The detailed contents of the error may include cause of error or specific error's contents (processing step where the error occurred). For example, for an error in the writing command processing, the cause of error may include unauthorized access, memory error or lowered operational voltage, and the specific error's contents may include information indicating a memory address where the writing error occurred.

After generating the additional information, the CPU 11 holds the generated additional information in the RAM 13 or the nonvolatile memory 16 (step S18). After holding the additional information in the RAM 13 or the nonvolatile memory 16, the CPU 11 generates a response, in which information (code information) indicating that an error has occurred and information indicating the presence of the additional information are set, in the status word (SW) (step S19). When generating the response in which the status word is set, the CPU 11 transmits the generated response to the IC card processing apparatus 2 (step S16).

The CPU 11 of the IC card 1 may hold information indicating that the status word indicating the presence of the additional information has been transmitted (or information indicating that the additional information is being held) in the RAM 13 or the like. For example, when a specific command (such as GET RESPONSE command) immediately after the response indicating the presence of the additional information has been transmitted is assumed as special command of requesting to read additional information, the information indicating that the additional information is held may be held until a next command is received after the response is transmitted.

When determining, based on the determination in step S12, that the received command is the command of requesting additional information (step S12, YES), the CPU 11 reads the additional information from the RAM 13 or the nonvolatile memory 16 (step S20). After reading the additional information, the CPU 11 sets the read additional information in the response data (step S21) and generates a response in which the information indicating the success of the processing is set in the status word (step S13). When generating the response in which the additional information is set in the response data, the CPU 11 transmits the generated response as the response to the command of requesting additional information to the IC card processing apparatus 2 (step S16).

Although the first processing example assumes that when an error occurs in the command processing, additional information indicating detailed contents of the error is generated, but is not limited thereto and the additional information indicating a detailed result of the command processing may be generated even when the command processing has been successfully performed. In other words, if there is information which cannot be totally notified as the processing result only by the status word even when the command processing has been successfully performed, the information may be held as additional information in the memory and the presence of the additional information may be notified by the response to the command.

As described above, when an error occurs in the processing for the command received from the high-order apparatus, the IC card 1 in the first processing example generates additional information indicating detailed contents of the error and holds it in the memory, and notifies the presence of the additional information by the response to the command. When receiving a command of requesting additional information from the high-order apparatus for the response, the IC card 1 transmits a response in which the held additional information is set in the response data.

In other words, when there is detailed information (additional information) which cannot be indicated only by the status word as a result of executing the command from the IC card processing apparatus 2, the IC card 1 in the first processing example indicates that the additional information is present by the status word in the response to the command, and when receiving the command of requesting to read the detailed information after the response, transmits the additional information to the IC card processing apparatus 2.

With the IC card 1 in the first processing example, there can be provided a function of notifying the detailed information (additional information) on the command processing result such as error's detailed contents to the high-order apparatus even in the existing command system. Consequently, the high-order apparatus can cause the IC card to perform efficient processings based on the information indicated by the detailed information (additional information).

Examples of a command processing in the entire IC card processing system will be described below.

There will be described herein processings when an error occurs in a processing for a writing command.

The cause of error for the writing processing may include unauthorized access, memory error or lowered operational voltage.

For example, when a writing command is received, if other logical channel is already occupying a file to be written, a writing error occurs due to no authority to access. In this case, the IC card 1 generates and holds the reason for the failed writing (that other logical channel is occupying a file to be accessed) as additional information. In this state, the IC card 1 transmits a response in which the status word indicating "failed writing" and "with additional information" is set, and thus terminates the processing for the received command. Thereafter, when receiving a special command of requesting additional information, the IC card 1 transmits the additional information indicating the reason for the failed writing.

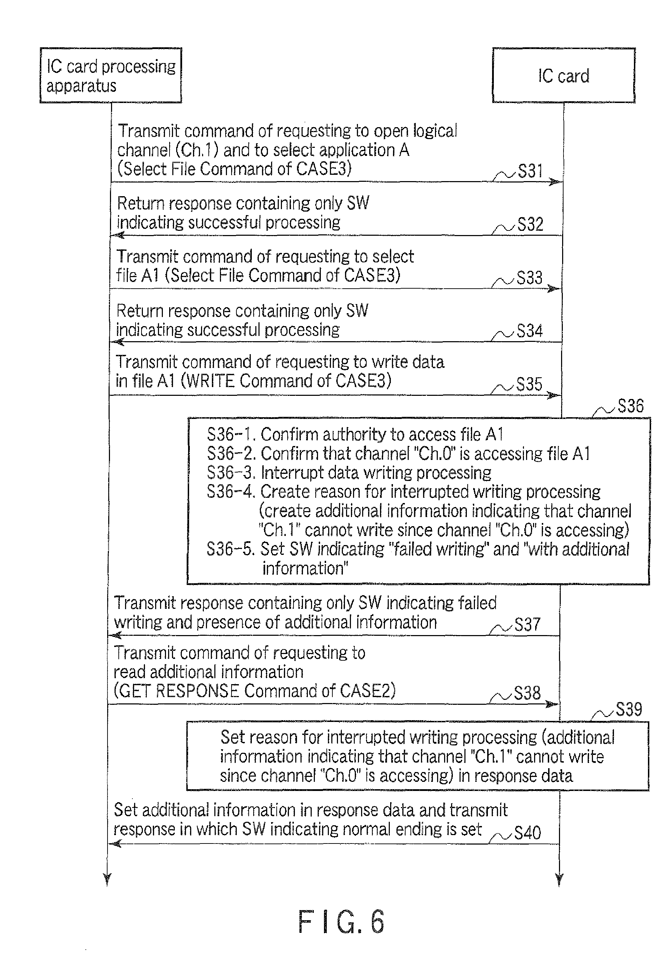

FIG. 6 is a sequence diagram when an error occurs in a writing command processing in the first processing example.

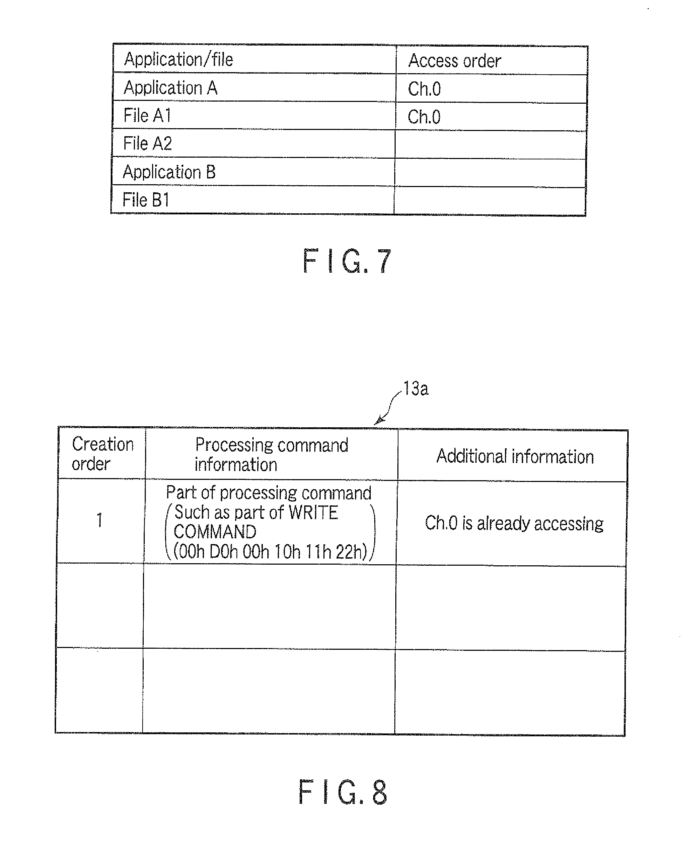

In the following description, it is assumed that applications A, B and files (EF) A1, A2, B1 are present in the IC card 1 as shown in FIG. 2. It is further assumed that the access states by multiple logical channels managed by the logical channel managing function 42 are those shown in FIG. 7 in the IC card 1. In the example shown in FIG. 7, the logical channel (Ch. 0) sets file A1 to current.

The IC card processing apparatus 2 as high-order apparatus transmits, to the IC card 1, a command of requesting to open the logical channel (Ch. 1) and to select application A in preparation for writing data in file A1 inside the IC card 1 (step S31). In response thereto, the IC card 1 performs a command processing of opening the logical channel (Ch. 1) and selecting application A. When successfully performing both the opening of the logical channel (Ch. 1) and the selection of application A, the IC card 1 transmits a response, in which the status word indicating the success of the command processing is set, to the IC card processing apparatus 2 (step S32).

When receiving the response indicating that the processing has been successfully performed for the command of requesting to open the logical channel (Ch. 1) and to select application A, the IC card processing apparatus 2 transmits a command of requesting to select file A1 to the IC card 1 (step S33). In response thereto, the IC card 1 performs a command processing of setting the current file in the logical channel (Ch. 1) for file A1. When successfully performing the processing of setting the current file in the logical channel (Ch. 1) for file A1, the IC card 1 transmits a response, in which the status word indicating the success of the command processing is set, to the IC card processing apparatus 2 (step S34).

When receiving the response indicating that the processing has been successfully performed for the command of requesting to select file A1, the IC card processing apparatus 2 transmits a writing command of requesting to write data in file A1 to the IC card 1 (step S35). The writing command is configured with a format of CASE3. In response thereto, the IC card 1 performs a writing processing corresponding to the writing command (step S36).

In the processing for the writing command, the CPU 11 of the IC card 1 first confirms the authority to access file A1 set in the current file (step S36-1). The writing command processing is directed for writing data in file A1 as current file in the logical channel "Ch. 1." The IC card 1 is in a state where file A1 is set in the current file in the logical channel "Ch. 0" as shown in FIG. 7. Thus, the CPU 11 of the IC card 1 determines that there is no authority to write data in file A1 in the logical channel "Ch. 1" (step S36-2). The CPU 11 of the IC card 1 does not perform but interrupts the command processing (data writing processing) based on the determination of no authority to write (step S36-3).

When interrupting the command processing corresponding to the received writing command, the CPU 11 of the IC card 1 creates additional information indicating a detailed reason for the interrupted command processing (step S36-4). The reason (error's detailed contents) for the interrupted command processing is that the logical channel "Ch. 0" is already accessing file A1. Thus, the CPU 11 of the IC card 1 creates additional information indicating the reason for the interrupted command processing (such as "the access priority of the logical channel (Ch. 1) to file A1 is the second" or "the logical channel (Ch. 0) is accessing file A1"). The thus-created additional information is stored in the RAM 13 or the nonvolatile memory 16 by the CPU 11.

While the additional information is being held, the CPU 11 of the IC card 1 creates a response in which the status word indicating the code information of "writing error" and "with additional information" is set (step S36-5). When creating the response in which the status word indicating "writing error" and "with additional information" is set, the CPU 11 of the IC card 1 transmits the created response to the IC card processing apparatus 2 (step S37) and terminates the processing for the writing command.

When receiving the response indicating the presence of additional information, the IC card processing apparatus 2 determines whether the additional information is necessary. The necessity of additional information may be previously set or may be selected by the operator of the IC card processing apparatus 2 as needed. The IC card processing apparatus 2 determines a command to be next supplied to the IC card 1 based on the determination result as to the necessity of additional information.

For example, when determining that the additional information is necessary, the IC card processing apparatus 2 transmits a special command of CASE2 (such as GET RESPONSE command of CASE2) for acquiring additional information as the next command (step S38). In response thereto, the IC card 1 performs the command processing of reading additional information (step S39). In this case, since the special command is for CASE2, the CPU 11 of the IC card 1 can return not only the status word but also the response data.

In other words, as the processing for the special command of requesting additional information, the CPU 11 of the IC card 1 reads the additional information stored in the RAM 13 or the nonvolatile memory 16 and transmits the read additional information as a response set in the response data to the IC card processing apparatus 2. When transmitting the additional information as the response data, the CPU 11 of the IC card 1 deletes the additional information stored in the RAM 13 or the nonvolatile memory 16. The additional information may remain stored instead of being deleted.

When determining that the additional information is not necessary, the IC card processing apparatus 2 does not need to transmit the special command of acquiring the additional information. In this case, the IC card processing apparatus 2 may transmit a normal command other than the special command of acquiring the additional information. When receiving a normal command other than the special command of acquiring the additional information after transmitting the response including the status word indicating the presence of additional information, the IC card 1 performs a command processing corresponding to the received command. When executing the normal command, the IC card 1 deletes the additional information stored in the RAM 13 or the nonvolatile memory 16. Also in this case, the additional information may remain stored instead of being deleted.

As described above, when a writing error occurs in the writing processing designated by the writing command, the IC card in the first processing example holds information indicating a cause for the writing error or a memory address for the writing error as additional information and transmits the status word indicating that "the processing did not normally end (writing error)" and "with additional information" as a response to the writing command. Thereafter, when receiving the special command of requesting additional information from the high-order apparatus, the IC card transmits its holding additional information.

For example, when not being able to write data since other channel is accessing a to-be-written file designated by a writing command, the IC card holds information indicating that other channel is accessing the file to be written as the additional information, and transmits the status word indicating that "the processing did not normally end" and "with additional information" as the response to the writing command. Thereafter, when receiving the special command of requesting additional information from the high-order apparatus, the IC card transmits the additional information indicating that other channel is accessing the file to be written.

When not being able to write data due to a memory error in the writing processing designated by the writing command, the IC card in the first processing example holds information indicating a memory address for the memory error as the additional information, and transmits the status word indicating that "the processing did not normally end" and "with additional information," as the response to the writing command. Thereafter, when receiving the special command of requesting additional information from the high-order apparatus, the IC card transmits the additional information indicating the memory address for the memory error.

According to the first processing example, the IC card can provide the additional information which cannot be transmitted by the response to the command to the high-order apparatus even in the existing command system. Consequently, the high-order apparatus can cause the IC card to perform efficient processings based on the detailed contents of the writing error obtained from the additional information.

A second processing example of the command processing in the IC card 1 will be described below.

Also in the second processing example, the IC card 1 conforms to the predefined command system. In the second processing example, the IC card 1 provides information on detailed error's contents to the high-order apparatus while operating according to the command system. For example, when an error occurs in the processing of executing a command given from the high-order apparatus, the IC card 1 generates additional information indicating detailed error's contents, and stores the generated additional information in the additional information table 13a. Further, the IC card 1 transmits the additional information stored in the additional information table 13a in response to a request from the high-order apparatus.

A configuration of the additional information table 13a according to the second processing example will be described below.

FIG. 8 is a diagram showing a configuration example of the additional information table 13a according to the second processing example.

The additional information table 13a can store multiple items of additional information (detailed information) therein. The number (maximum number) of items of additional information storable in the additional information table 13a may be previously set. For example, the maximum number of items of additional information storable in the additional information table 13a is set during the processing of issuing the IC card 1.

The additional information table 13a stores therein creation order, processing command information and additional information in an associated manner. The additional information is detailed information on an execution result of the executed processing command. The additional information assumes information which cannot be transmitted by response data of the executed processing command. For example, when an error occurs in the execution result of the executed processing command, the IC card 1 generates information indicating the detailed error's contents as the additional information. In the example shown in FIG. 8, the fact that the writing error occurred since the channel "Ch. 0" was accessing a file to be written is stored as the additional information for the writing command. The additional information is the information which cannot be notified only by the status word as the processing result, and is not limited to the information indicating the detailed error's contents. For example, even when the command processing is successfully performed, the IC card 1 may generate the information on the command execution result as the additional information.

The creation order is indicative of an order of creating (order of storing) corresponding additional information. When multiple items of additional information are stored in the additional information table 13a, each item of additional information is assigned a creation order from the latest. Thus, the creation order of each item of additional information is updated whenever additional information is stored in the additional information table 13a.

The processing command information is indicative of the processing command contents by which the additional information is generated. The processing command information is indicative of the processing command itself by which the additional information on the execution result is generated. For example, the processing command information stores therein part of the actually-received command. In the example shown in FIG. 8, the processing command information stores therein partial data (00h D0h 00h 00h 10h 11h 12h) of WRITE COMMAND. Thereby, the IC card processing apparatus 2 as high-order apparatus can designate specific additional information by the processing command information in a special command of requesting to read additional information described later.

A flow of the second processing example of the command processing in the IC card 1 will be described below.

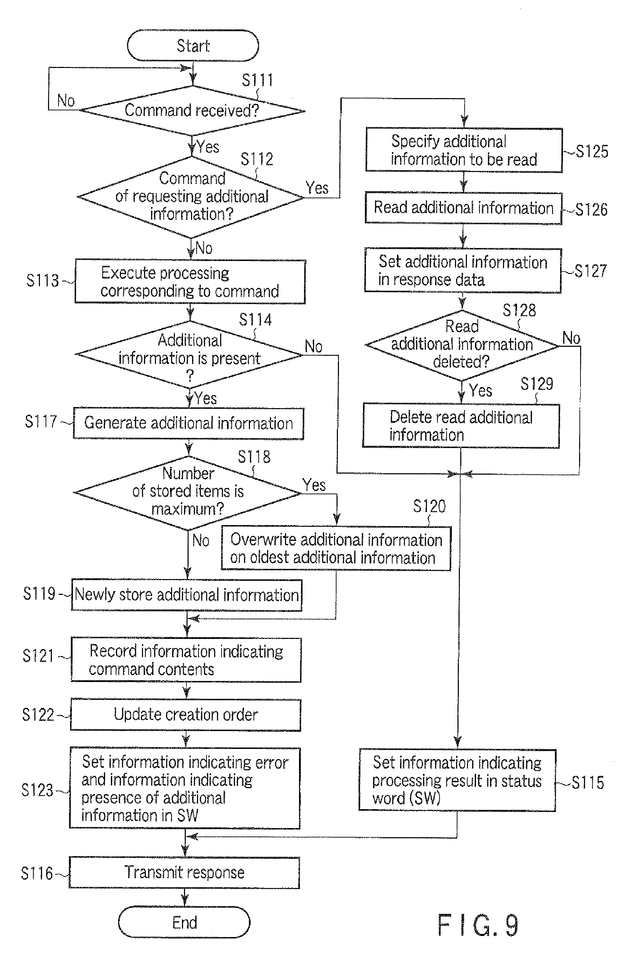

FIG. 9 is a flowchart for describing the flow of the second processing example for a command in the IC card 1.

The powered-on IC card 1 can receive a command from the IC card processing apparatus 2 by the communicating unit 14 in the standby state (step S111). When the communicating unit 14 receives a command from the IC card processing apparatus 2 in this state (step S111, YES), the CPU 11 of the IC card 1 determines whether the received command is a command of requesting additional information (step S112). The command of requesting to read additional information is assumed as a predefined special command. In this case, the CPU 11 determines whether the received command is the special command.

As in the example shown in FIG. 7 or 8 described later, the special command of requesting to read additional information may use the GET RESPONSE command (GET RESPONSE Command of CASE2 defined in ISO). The additional information to be read or the processing contents for (whether to delete) the read additional information can be designated by a parameter of the special command.

When determining that the received command is not the special command of requesting to read additional information based on the above determination (step S112, NO), the CPU 11 performs a processing corresponding to the received command (processing command) (step S113). The CPU 11 determines the processing contents designated by the command header, thereby performing the processing requested by the processing command.

When the additional information (detailed information) is absent as the processing command execution result (step S114, NO), the CPU 11 generates response data in which information (code information) indicating the processing result is set in the status word (SW) (step S115) and transmits the generated response data to the IC card processing apparatus 2 (step S116). For example, when the processing has normally ended for the wiring command, the CPU 11 generates response data in which information (code information) indicating the success of the processing is set, and transmits it to the IC card processing apparatus 2. After transmitting the response, the IC card 1 is allowed to receive a next command.

When the additional information (detailed information) is present as the processing command execution result (step S114, YES), the CPU 11 generates additional information (detailed information) indicating detailed contents of the processing command execution result (step S117). The additional information cannot be transmitted as the processing command execution result by the normal response data for the processing command. For example, when an error occurs in the writing command processing, the CPU 11 generates, as additional information, detailed information containing information indicating a cause of error or specific error's contents (such as processing step where the error occurred). The cause of the error in the writing command processing may be unauthorized access, memory error or lowered operational voltage, and the specific error's contents may be information indicating a memory address where the writing error occurred.

When generating the additional information, the CPU 11 determines whether the number of items of additional information previously stored in the additional information table 13a is a predetermined maximum number (step S118). The maximum number of items is a value which is set during the processing of issuing the IC card 1, for example. When the number of items of existing additional information is less than the maximum number (step S118, NO), the CPU 11 newly stores (adds) the generated additional information in the additional information table 13a (step S119). When the number of items of existing additional information is the maximum number (step S118, YES), the CPU 11 overwrites the generated additional information on the oldest additional information stored in the additional information table 13a (step S120). Thus, when the number of items of existing additional information is the maximum, the oldest additional information among the existing additional information is deleted from the additional information table 13a and the newly-generated latest additional information is stored therein.

When storing the generated additional information in the additional information table 13a, the CPU 11 stores information indicating the contents of the command by which the additional information is generated (processing command information shown in FIG. 5) in the additional information table 13a in association with the additional information (step S121). The information indicating the contents of the command by which the additional information is generated is information by which the high-order apparatus (IC card processing apparatus) designates specific additional information. For example, the information indicating the contents of the command by which the additional information is generated may use partial information of the command as shown in FIG. 5.

When storing the additional information and the information indicating the command contents in the additional information table 13a, the CPU 11 updates the creation order corresponding to each item of additional information stored in the additional information table 13a (step S122). For example, when storing the first item of additional information in the additional information table 13a, the CPU 11 stores the creation order corresponding to the additional information as "1." When the additional information is already stored in the additional information table 13a, the CPU 11 increments (adds 1 to) the creation order of the existing additional information, and stores the creation order of the newly-stored additional information (latest additional information) as "1." Thus, the additional information table 13a is updated such that the creation order of each item of additional information is numbered from the latest.

The additional information table 13a is provided in the RAM 13. The additional information table 13a provided in the RAM 13 clears the detailed information as the additional information stored whenever the IC card 1 is reset. In other words, the additional information table 13a provided in the RAM 13 is reset whenever the IC card 1 is reset. In other words, when the additional information is desired to be reset whenever the IC card 1 is reset, the additional information table 13a is provided in the RAM 13.

The additional information table 13a may be provided in the nonvolatile memory 16. The additional information table 13a provided in the nonvolatile memory 16 holds the additional information even when the IC card is powered off. In other words, the additional information table 13a provided in the nonvolatile memory 16 holds the detailed information as the additional information until it is overwritten or deleted by a command. In other words, when the additional information is desired to be held even if the IC card is deactivated, the additional information table 13a is provided in the nonvolatile memory 16.

When storing the additional information, the processing command information and the creation order in the additional information table 13a, the CPU 11 generates response data in which information (code information) indicating the command processing result and information indicating the presence of the additional information are set in the status word (SW) (step S123). When generating the response data in which the information indicating the presence of the additional information is set, the CPU 11 transmits the generated response to the IC card processing apparatus 2 (step S116). After transmitting the response, the IC card 1 is allowed to receive a next command.

When determining that the command received in step S112 is the special command of requesting to read additional information (which will be simply referred to as special command below) (step S112, YES), the CPU 11 performs a processing of specifying additional information to be read from the additional information stored in the additional information table 13a (step S125). The additional information to be read is determined based on the contents of the special command (parameter or reception timing) of requesting to read the additional information.

In the second processing example, the additional information table 13a stores therein the creation order and the processing command information in association with the additional information. Thus, the special command of requesting to read additional information can designate specific additional information by the creation order or the processing command information. Further, the latest additional information may be the additional information to be read for the special command by which specific additional information is not designated. The special command may designate multiple items of additional information or all of the additional information. The CPU 11 determines that multiple items of additional information or all of the additional information are to be read for the special command.

When specifying the additional information to be read, the CPU 11 reads the specified additional information to be read from the additional information table 13a (step S126), and generates response data in which the read additional information is set (step S127.

When generating the response data in which the additional information to be read is set, the CPU 11 determines whether to delete or store the read additional information (step S128). Whether to delete the read additional information may be designated by a parameter of the special command or may be previously set. For example, when being able to designate whether to delete the additional information read by the special command, the CPU 11 determines whether to delete the read additional information by the parameter of the received special command.

When determining to delete the read additional information (step S128, YES), the CPU 11 deletes the read additional information from the additional information table 13a (step S129). In this case, the CPU 11 may update the creation order of the additional information remaining in the additional information table 13a. The processings in steps S128 and S129 may be performed after the read additional information is set in the response data or after the response data is transmitted.

When setting the additional information to be read, which is designate by the special command, in the response data, the CPU 11 sets the information indicating the success of the processing in the status word for the response data in which the additional information to be read is set (step S115), and transmits it as the response to the special command to the IC card processing apparatus 2 (step S116).

As described above, when additional information (detailed information) which cannot be indicated by the status word as the execution result for the processing command received from the high-order apparatus is present, the IC card according to the second processing example generates additional information, stores the generated additional information in the additional information table in association with the information indicating the processing command and the creation order, and notifies that the additional information is present by the response to the processing command. When receiving the special command of requesting to read the additional information stored in the additional information table from the high-order apparatus, the IC card specifies the additional information designated by the special command, generates the response data in which the specified additional information is set, and transmits it to the high-order apparatus.

According to the second processing example, the IC card 1 can provide a function of storing multiple items of additional information (detailed information) on the processing command execution result such as detailed information on the error's contents, and of notifying the stored additional information at any timing in response to a request from the high-order apparatus in the existing command system. Consequently, the high-order apparatus can cause the IC card to perform efficient processings based on the information indicated by the detailed information (additional information).

The flow of the second processing example in the entire IC card processing system will be described below by way of a specific example.

There will be first described a specific example of reading the latest additional information (detailed information) generated as a command execution result.

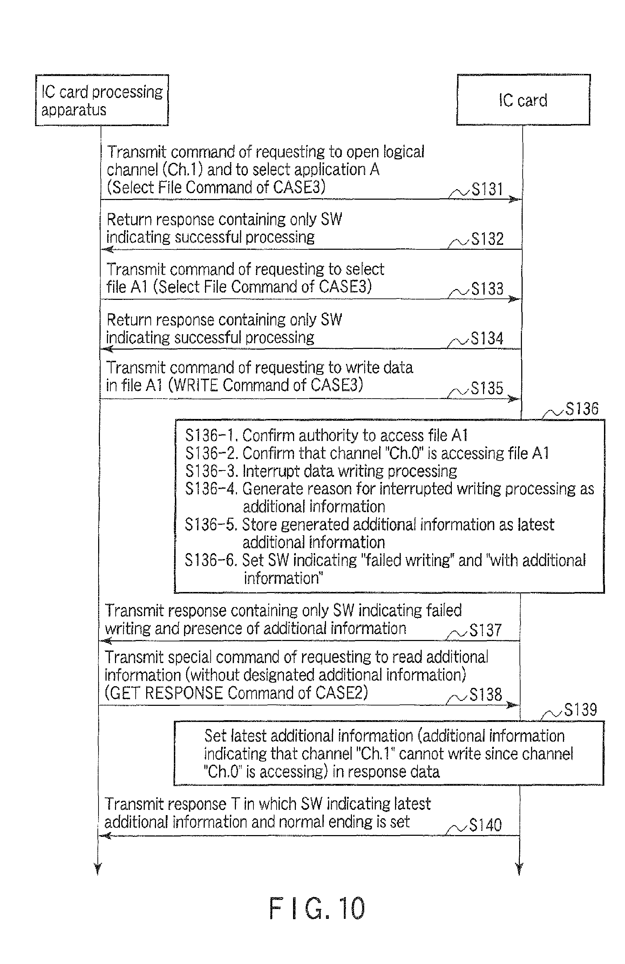

FIG. 10 is a sequence diagram showing a processing example of reading the latest additional information. FIG. 10 shows a sequence indicating a processing example in which an error occurs in a writing command processing. A cause of error for the writing processing may be unauthorized access, memory error or lowered operational voltage.

For example, when a writing command is received, if other logical channel is already occupying a file to be written, a writing error occurs due to unauthorized access. In this case, the IC card 1 generates and holds the reason for the failed writing (that other logical channel is occupying a file to be accessed) as additional information. In this state, the IC card 1 returns a response in which the status word indicating "failed writing" and "with additional information" is set, and thus ends the processing for the received writing command. Thereafter, when receiving the special command of requesting additional information, the 1C card 1 transmits the additional information indicating the reason for failed writing.

As shown in FIG. 2, it is assumed that applications A, B and files (EF) A1, A2, B1 are present in the IC card 1. Further, the IC card 1 assumes that the access state in multiple logical channels managed by the logical channel managing function 42 is a state where the logical channel "Ch. 0" sets file A1 to current.

First, the IC card processing apparatus 2 as high-order apparatus transmits a command of requesting to open a logical channel (Ch. 1) and to select application A to the IC card 1 in preparation for writing data in file A1 within the IC card 1 (step S131). In response thereto, the IC card 1 performs a command processing of opening the logical channel (Ch. 1) and selecting application A. When successfully opening the logical channel (Ch. 1) and selecting application A, the IC card 1 transmits a response in which the status word indicating the success of the command processing is set to the IC card processing apparatus 2 (step S132).

When receiving the response indicating that the processing has been successfully performed for the command of opening the logical channel (Ch. 1) and selecting application A, the IC card processing apparatus 2 transmits a command of requesting to select file A1 to the IC card 1 (step S133). In response thereto, the IC card 1 performs a command processing of setting the current file in the logical channel (Ch. 1) for file A1. When successfully performing the processing of setting the current file in the logical channel (Ch. 1) for file A1, the IC card 1 transmits a response in which the status word indicating the success of the command processing is set to the IC card processing apparatus 2 (step S134).

When receiving the response indicating that the processing has been successfully performed for the command of requesting to select file A1, the IC card processing apparatus 2 transmits a writing command of requesting to write data in file A1 to the IC card 1 (step S135). The writing command is configured with a CASE3 format. In response thereto, the IC card 1 performs a writing processing corresponding to the writing command (step S136).

In the processing for the writing command, the CPU 11 of the IC card 1 first confirms the authority to access file A1 set as current file (step S136-1). The processing for the writing command is such that the logical channel "Ch. 1" writes data in file A1 as current file. The IC card 1 is setting file A1 as current file in the logical channel "Ch. 0." Thus, the CPU 11 of the IC card 1 determines that there is no authority to write data in file A1 in the logical channel "Ch. 1" (step S136-2). Based on the determination of no authority to write, the CPU 11 of the IC card 1 does not perform but interrupts the data writing processing requested by the command (step S136-3).

When interrupting the command processing corresponding to the received writing command, the CPU 11 of the IC card 1 generates additional information (detailed information) indicating a detailed reason for the interrupted command processing (step S136-4).

Here, the reason for the interrupted command processing (detailed information on error's contents) is that the logical channel "Ch. 0" is already accessing file A1. Thus, the CPU 11 of the IC card 1 generates additional information indicating the reason for the interrupted command processing (such as "the logical channel "Ch. 0" is accessing file A and so writing failed in the logical channel "Ch. 1" or "the access priority of the logical channel (Ch. 1) to file A1 is the second"). The CPU 11 associates the generated additional information with information indicating the erroneous writing command for the processing command information (part of the writing command (00h D0h 00h 00h 10h 11h 12h)), and stores it as the latest additional information (information having the creation order of "1") in the additional information table 13a (step S136-5).

When storing the latest additional information in the additional information table 13a, the CPU 11 of the IC card 1 creates a response in which the status word indicating the code information of "writing error" and "with additional information" is set (step S136-6). When creating the response in which the status word indicating "writing error" and "with additional information" is set, the CPU 11 of the IC card 1 transmits the created response to the IC card processing apparatus 2 (step S137) and ends the processing for the writing command.

When receiving the response indicating the presence of additional information, the IC card processing apparatus 2 determines whether the additional information is necessary immediately. The necessity of additional information may be previously set or may be selected by the operator of the IC card processing apparatus 2 as needed. The IC card processing apparatus 2 determines a command to be next supplied to the IC card 1 based on the determination result as to the necessity of additional information. The IC card processing apparatus 2 requests the IC card 1 to read the latest additional information immediately.

When determining that the latest additional information is necessary, the IC card processing apparatus 2 transmits the special command of requesting to read additional information designating the latest additional information (such as GET RESPONSE command of CASE2) to the IC card 1 (step S138). The special command may be such that when specific additional information is not designated, the latest additional information is determined as the additional information to be read. The special command may designate the latest additional information by designating the creation order of "1" or designating the processing command information (here, writing command) by which the latest additional information is generated. The IC card processing apparatus 2 which has received the response indicating the presence of additional information requests to read the latest additional information by the special command of not designating specific additional information.

If additional information is not designated by the special command, the CPU 11 of the IC card 1 which has received the special command determines that the special command is of requesting to read the latest additional information. Based on this determination, the CPU 11 of the IC card 1 reads the latest additional information (additional information having the latest creation order) from the additional information table 13a, and sets it in the response data (step S39). When setting the latest additional information in the response data, the CPU 11 of the IC card 1 transmits the response data to the IC card processing apparatus 2 (step S140).

As described above, when specific additional information is not designated by the special command of requesting to read additional information, the IC card can transmit the latest additional information stored in the additional information table as response. The read latest additional information may be deleted or saved. For example, when designating whether to delete the read additional information by the special command, the CPU 11 of the IC card 1 deletes or saves the read additional information based on the designation by the special command.

When the latest additional information is not necessary immediately, the IC card processing apparatus 2 can continuously perform normal processings by transmitting normal commands other than the special command of requesting to read additional information to the IC card 1 even after transmitting the response containing the status word indicating the presence of additional information. Also in this case, the IC card 1 is holding a predetermined maximum number of items of additional information in the additional information table 13a. Thus, the IC card processing apparatus 2 can acquire specific additional information from the IC card 1 after performing other processing.

There will be described below a processing example of reading additional information stored in the additional information table 13a after performing multiple command processings.

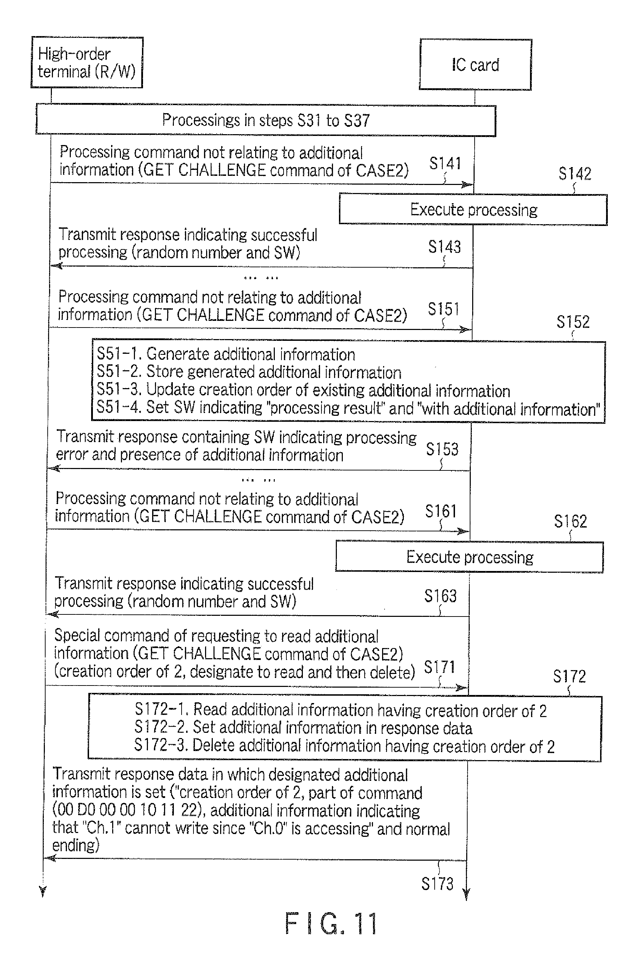

FIG. 11 is a sequence diagram showing a processing example of reading additional information stored in the additional information table 13a after performing multiple command processings not relating to the additional information.

It is assumed that the processings in steps S131 to S137 shown in FIG. 10 have been performed. Even in this state (when the status word indicating the presence of additional information has been received), if the latest additional information is not necessary immediately, the IC card processing apparatus 2 transmits normal commands to the IC card 1, thereby continuously performing normal processings.

In the processing example of FIG. 11, after receiving the status word indicating the presence of additional information for the writing command in step S137, the IC card processing apparatus 2 supplies a processing command (GET CHALLENGE command of CASE2) of requesting a processing not relating to additional information to the IC card 1 (step S141). The IC card 1 which has received the processing command performs the processing requested by the processing command (step S142). When normally performing the processing for the processing command, the IC card 1 transmits a processing result (random number, herein) in which the status word indicating the normal ending is set to the IC card processing apparatus 2 (step S143). In this manner, the IC card processing apparatus 2 can perform a normal command processing even after receiving the status word indicating the presence of additional information.

It is assumed that the IC card processing apparatus 2 has supplied the processing command of requesting a processing not relating to additional information (GET CHALLENGE command of CASE2) to the IC card 1 (step S151). The CPU 11 of the IC card 1 which has received the processing command performs the processing requested by the processing command (step S152). When additional information which cannot be indicated by the status word occurs while the processing command is being executed, the CPU 11 generates additional information (detailed information) on the execution result of the processing command (step S152-1). When generating additional information, the CPU 11 associates the generated additional information with the information indicating the processing command (part of the processing command) and stores it in the additional information table 13a (step S152-2).

The generated additional information for the processing command should be stored in the additional information table 13a as the latest additional information having the creation order of "1." Since other additional information has been already stored in the additional information table 13a, the CPU 11 updates the creation order of the existing additional information (step S152-3). In other words, in the processing example of FIG. 8, the additional information generated in step S136-4 is stored in the additional information table 13a. Thus, the CPU 11 updates the creation order of the additional information generated in step S136-4 to "2."

When storing the latest additional information in the additional information table 13a, the CPU 11 of the IC card 1 creates the response data in which the status word indicating code information on the processing result for the processing command (such as code information indicating processing error) and the presence of additional information is set (step S152-4). When creating the response data in which the status word indicating the code information on the processing result and the presence of additional information is set, the CPU 11 of the IC card 1 transmits the created response data to the IC card processing apparatus 2 (step S153).

Even when receiving the response data, the IC card processing apparatus 2 can continue the processing not relating to the additional information. In the example shown in FIG. 11, the IC card processing apparatus 2 supplies the processing command (GET CHALLENGE command of CASE2) of requesting a processing not relating to additional information to the IC card 1 (step S161). The IC card 1 which has received the processing command performs the processing requested by the processing command (step S162). When normally performing the processing for the processing command, the IC card 1 transmits the processing result (random number, here), in which the status word indicating the normal ending is set, to the IC card processing apparatus 2 (step S163).

It is assumed that the IC card processing apparatus 2 attempts to read the additional information generated in step S136 (that is, the additional information notified in step S137). Then, the IC card processing apparatus 2 transmits a special command of designating the additional information having the creation order of "2" and requesting to read the additional information to the IC card 1 (step S171). Here, it is assumed that the IC card processing apparatus 2 recognizes the creation order of the additional information to be read. When not recognizing the creation order of the additional information to be read, the IC card processing apparatus 2 may designate the additional information to be read by the processing command information (information indicating part of the writing command) stored in association with the additional information.

The special command of requesting to read additional information can designate to read not only specific additional information but also multiple items of additional information, or can designate to read all of the additional information.

The special command of requesting to read additional information can designate to delete the read additional information by parameter setting. In the example shown in FIG. 11., the special command of designating the additional information having the creation order of "2" is assumed to designate to delete the read additional information.

The CPU 11 of the IC card 1, which has received the special command of designating to read the additional information having the creation order of "2", reads the designated additional information having the creation order of "2" from the additional information table 13a (step S172-1). When reading the designated additional information having the creation order of "2", the CPU 11 creates response data in which the read additional information having the creation order of "2" is set (step S172-2). When setting the additional information having the creation order of "2" in the response data, the CPU 11 deletes the additional information having the creation order of "2" from the additional information table 13a (step S172-3).

When setting the additional information designated by the special command in the response data, the CPU 11 of the IC card 1 transmits the response data to the IC card processing apparatus 2 (step S173). The response data sets therein the information indicating that the creation order is "2", the processing command information is a writing command (partial data is (00h D0h 00h 00h 10h 11h 12h)), and additional information indicates that the channel "Ch. 1" cannot write since the channel "Ch. 0" is accessing file A1 to be written."

As described above, in the second processing example, the IC card can store therein multiple items of additional information. Thus, in the second processing example, even when notified of the presence of additional information from the IC card, the IC card processing apparatus can continuously execute a command not relating to the additional information. Even after executing the command not relating to the additional information, the IC card processing apparatus can acquire additional information generated in the past command processing from the IC card 1 at any timing. Consequently, the IC card processing apparatus can cause the IC card to perform efficient processings based on the additional information (detailed information) generated in the command processing in the IC card even in the existing command system.

A third processing example of the command processing in the IC card 1 will be described below.

Also in the third processing example, the IC card 1 conforms to the predefined command system. In the third processing example, when an error occurs in a processing of executing a command given from the high-order apparatus, the IC card 1 generates additional information indicating detailed information on error's contents, and stores the generated additional information in the additional information table 13a. The IC card 1 transmits the additional information stored in the additional information table 13a in response to a request from the high-order apparatus.

A configuration of an additional information table 13a' according to the third processing example will be described below.

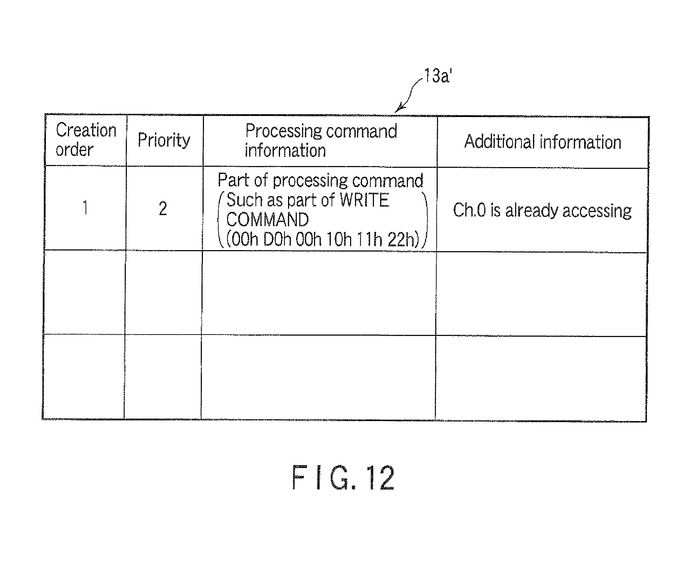

FIG. 12 is a diagram showing a configuration example of the additional information table 13a'.

The additional information table 13a' can store therein multiple items of additional information (detailed information). The number of items (maximum number of items) of additional information storable in the additional information table 13a' may be preset. For example, the maximum number of items of additional information storable in the additional information table 13a' is set during the processing of issuing the IC card 1.

Whenever additional information is generated due to an error in the command processing, the additional information table 13a' stores therein additional information associated with creation order, priority and processing command information. The additional information indicates detailed contents of an event occurring while the command processing is being executed. The additional information is assumed to be information which cannot be notified by the response data for the executed command processing. For example, when an error occurs in the command processing, the IC card 1 generates information indicating detailed error's contents as additional information.

For example, in the example shown in FIG. 12, there is stored, as the additional information for the writing command, the fact that a writing error occurs since the logical channel "Ch. 0" is accessing a file to be written. The information indicating the error's contents cannot be notified by the response for the writing command in the existing command system. Thus, the IC card 1 generates the additional information indicating error's contents. The additional information cannot be notified only by the status word in the response indicating the processing result of the command processing, and is not limited to the information on the detailed error's contents. For example, even when successfully performing the command processing, the IC card 1 may generate information indicating an event occurring while the command processing is being executed as the additional information.

The creation order is information indicating the order of creating (order of storing) additional information. When multiple items of additional information are stored in the additional information table 13a', each additional information is given a creation order from the latest, for example. In this case, the creation order of each additional information is updated whenever additional information is stored in the additional information table 13a'.

The processing command information indicates contents of a processing command by which additional information is generated. The processing command information indicates the processing command itself by which additional information relating to an execution result is generated. For example, part of the actually-received command is stored as the processing command information. In the example shown in FIG. 12, partial data of WRITE COMMAND (00h D0h 00h 00h 10h 11h 12h) is stored as the processing command information. Thus, the IC card processing apparatus 2 as high-order apparatus can designate specific additional information by the processing command information in the special command of requesting to read additional information described later.

The priority is information indicating a degree of importance of additional information. The priority of additional information is determined depending on the contents of the additional information. The additional information which is important for the operation of the entire IC card processing system or IC card itself is given a high priority (such as "5" of five-level priority or "3" of three-level priority). The additional information which has high importance or emergency and is to be surely notified to the high-order apparatus (IC card processing apparatus) has a higher priority. For example, the additional information having a high priority may assume additional information indicating a failure that the entire system or the IC card cannot normally function. Specifically, additional information indicating a hardware failure that the IC card 1 cannot normally operate causes a higher priority. Additional information indicating important information on security such as illegal attack for stopping the operation of the IC card also causes a higher priority.

To the contrary, a lower priority (such as "1" of five-level priority or "1" of three-level priority) is given to additional information indicating a minimal problem which does not influence the operation of the entire IC card processing system or IC card itself and has a little impact on the later command processings. For example, a lower priority is given to the additional information which has a little impact on the later command processings even when being ignored by the high-order apparatus (IC card processing apparatus). Specifically, additional information indicating a writing error due to temporarily unstable power supply voltage may be given a lower priority since the error is to be eliminated by stable power supply voltage.

A middle priority (such as "2" to "4" of five-level priority or "2" of three-level priority) is given to additional information which is not problematic in terms of the operation of the entire IC card processing system or the IC card itself but influences the later command processings. For example, additional information indicating that an error occurs due to no authority to access a relevant file may have a middle priority. Additional information indicating that an error occurs due to the absence of a to-be-accessed file designated by the command may have a middle priority.

The priority of additional information may be changed depending on an occurrence frequency or the number of times of continuous occurrence. For example, when additional information having the same contents has already present in the additional information table, the priority may be set higher by incrementing the priority of new additional information by 1. When the number of times of continuous occurrence is a predetermined threshold or more, the priority of the additional information may be set higher. The priority of additional information may be set higher depending on the occurrence frequency of the additional information having the same contents in the IC card.

The IC card 1 has a function of determining contents of a command processing depending on the priority of the additional information held in the additional information table 13a'. For example, when holding additional information having a high priority, the IC card 1 may notify that it is holding the additional information having a high priority instead of performing a processing for the received command. With the operation form, when holding additional information having a high priority, the IC card 1 keeps notifying that it is holding the additional information having a high priority until the additional information is read. With the processing, the IC card 1 can accurately notify the high-order apparatus of the additional information having a high priority.

When holding additional information having a low priority, the IC card 1 may delete the additional information having a low priority if it is not requested to read the additional information by the high-order apparatus. With the processing, the IC card 1 has a less possibility that the additional information table is occupied by the additional information having a low priority.

In the third processing example, the priority of additional information is assumed to be determined mainly depending on the necessity (importance or emergency) of being notified to the high-order apparatus (IC card processing apparatus). The priority of additional information may be information capable of classifying the additional information for each type. For example, the type of additional information may be determined instead of the priority, and information indicating the type of additional information may be stored in the additional information table 13a' instead of the priority. Even in this case, the IC card 1 can perform a processing corresponding to the type of additional information.

A flow of the third processing example of the command processing in the IC card 1 will be described below.

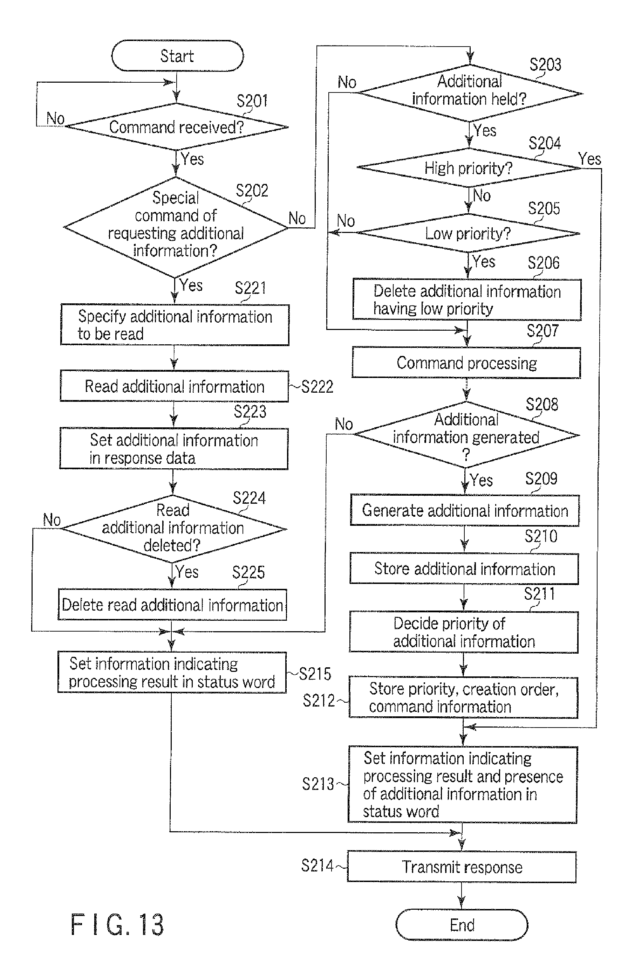

FIG. 13 is a flowchart for describing the flow of the third processing example for a command in the IC card 1.

The powered-on IC card 1 can receive a command from the IC card processing apparatus 2 by the communicating unit 14 in the standby state (step S201). When the communicating unit 14 receives a command from the IC card processing apparatus 2 in this state (step S201, YES), the CPU 11 of the IC card 1 determines whether the received command is a command of requesting additional information (step S202). The command of requesting to read additional information is a predefined special command.

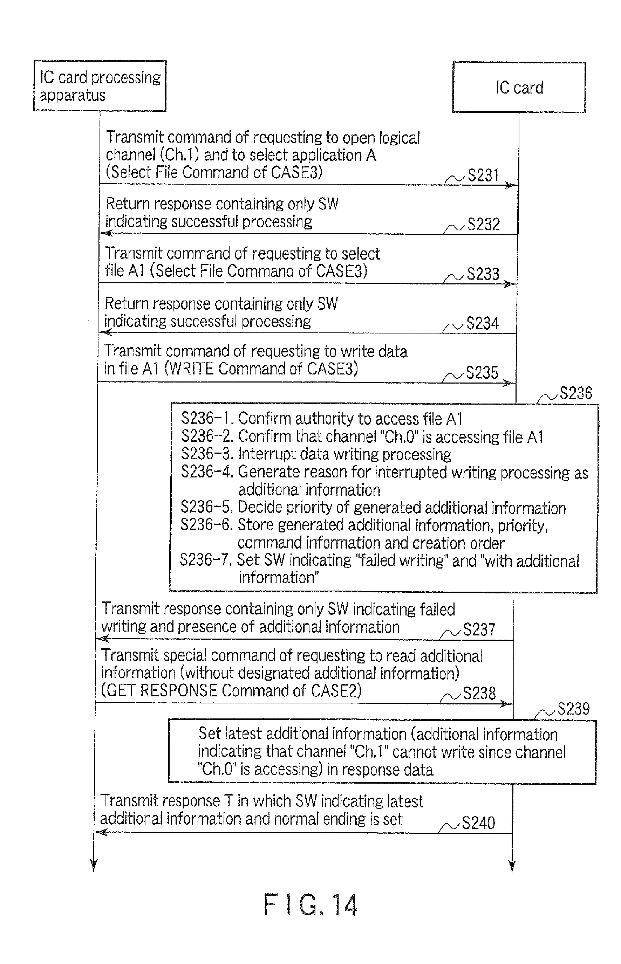

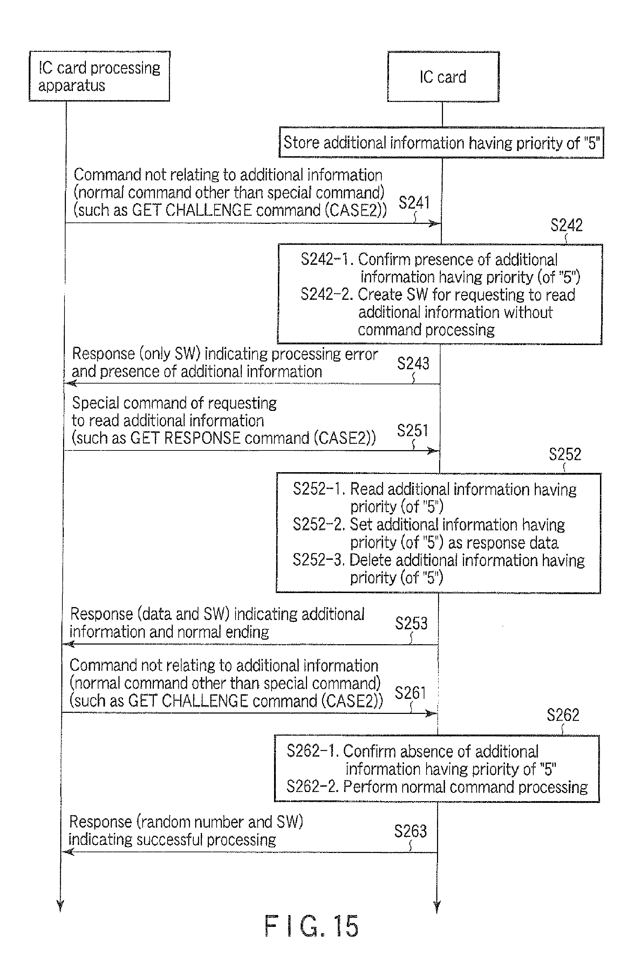

For example, the special command of requesting to read additional information may employ a GET RESPONSE command (GET RESPONSE Command of CASE2 defined in ISO) as in the example shown in FIG. 14 or 15 described later. The special command can designate additional information to be read or processing contents of (whether to delete) the read additional information by a parameter.

When determining, based on the determination, that the received command is not the special command of requesting to read additional information (which will be simply referred to as special command below) (step S202, NO), the CPU 11 determines whether additional information is stored in the additional information table 13a' (step S203). When determining that additional information is stored in the additional information table 13a' (step S203, YES), the CPU 11 determines whether additional information having a higher priority than a first threshold is present in the additional information table 13a' (step S204). The first threshold is for determining, based on the priority, whether additional information is to be surely notified to the high-order apparatus.

In other words, in the third processing example, the IC card 1 determines whether additional information to be surely notified to the IC card processing apparatus 2 as high-order apparatus is being held in the additional information table 13a'. In other words, the CPU 11 determines whether the additional information held in the additional information table 13a' is to be surely notified to the IC card processing apparatus 2 based on whether the priority is the first threshold or more. For example, when the first threshold is set to "5" for the five-level priority of "1" to "5", the CPU 11 determines that the additional information having the priority of "5" is the additional information having a high priority.

When determining that additional information having a higher priority than the first threshold is present (step S204, YES), the CPU 11 creates response data in which the status word indicating the presence of additional information is set (step S213) and transmits the created response data to the IC card processing apparatus 2 (step S214) instead of performing a processing for the received command. Thus, as long as the additional information having a higher priority than the first threshold is present in the additional information table 13a', the IC card 1 repeats only the response indicating the presence of additional information instead of performing a command processing for a normal command other than the special command. Consequently, the IC card processing apparatus 2 cannot cause the IC card 1 to perform other processings until it reads the additional information having a high priority from the IC card 1.

When determining that the additional information having a higher priority than the first threshold is not present (step S204, NO), the CPU 11 determines whether additional information having a priority of a second threshold or less is present in the additional information table 13a' (step S205). The second threshold is for determining, based on the priority, whether the additional information may not be notified to the high-order apparatus.

In other words, in the third processing example, the IC card 1 determines whether the additional information held in the additional information table 13a' may not be notified to the high-order apparatus. In the present embodiment, the additional information having the second threshold or less is deleted in later step S206. This means that the processing in step S205 determines whether the additional information held in the additional information table 13a' may be deleted. In other words, when receiving a command other than the special command, the CPU 11 determines whether the additional information generated by the immediately-previous command processing, which has not been requested to read from the IC card processing apparatus 2, may be deleted. For example, when setting the second threshold to "1" for the five-level priority of "1" to "5", the CPU 11 determines that the additional information having the priority of "1" is additional information having a low priority.

When determining that the additional information having a priority of the second threshold or less is present (step S205, YES), the CPU 11 deletes the additional information having a priority of the second threshold or less (the additional information generated in the immediately-previous command processing) from the additional information table 13a' (step S206). When determining the priority of additional information based on an occurrence frequency or the number of times of continuous occurrence, the contents of the additional information to be deleted from the additional information table 13a' may be stored in the storage area other than the additional information table 13a'. The additional information may be recorded in the additional information table 13a' in association with the fact that it has been deleted instead of being completely deleted.

When determining that the additional information having a priority of the second threshold or less is not present (step S205, NO) or when deleting the additional information having a priority of the second threshold or less (step S206), the CPU 11 performs a command processing according to the contents of the received command (step S207). In the command processing, the CPU 11 determines the processing contents designated by a command header and thus performs a processing according to the contents of the received command.

When executing the command processing, the CPU 11 determines whether there has occurred an event (such as error) to be notified as additional information (detailed information) to the IC card processing apparatus 2 while the command processing is being executed (step S208). When there has not occurred an event to be notified as additional information to the IC card processing apparatus 2 during the command processing (step S208, NO), the CPU 11 generates response data in which information (code information) indicating the processing result is set in the status word (SW) (step S215), and transmits the generated response data to the IC card processing apparatus 2 (step S214). For example, when normally completing the processing for the writing command, the CPU 11 generates the response data in which the information (code information) indicating the success of the processing is set, and transmits it to the IC card processing apparatus 2. After transmitting the response, the IC card 1 is allowed to receive a next command.

When there has occurred an event (such as error) to be notified as additional information to the IC card processing apparatus 2 during the command processing, that is, when additional information has been generated (step S208, YES), the CPU 11 generates additional information (detailed information) indicating detailed contents of the execution result of the command processing (step S209). The additional information cannot be transmitted by the response to the command as the execution result of the command processing. For example, when an error occurs in the writing command processing, the CPU 11 generates detailed information indicating cause of error or specific error's contents (processing step where the error occurred) as additional information. For the error in the writing command processing, the cause of error may be memory error (hardware failure), illegal attack (processing by unauthorized access procedure), no authority to access or lowered operational voltage. The information indicating specific error's contents may be information indicating a memory address where the writing error occurred.

When generating the additional information, the CPU 11 newly stores the generated additional information in the additional information table 13a' (step S210). The CPU 11 performs a processing of determining a priority of the generated additional information (step S211). The priority of the additional information is determined depending on importance or emergency of the additional information, and for example is determined depending on the necessity of being notified to the IC card processing apparatus 2 as high-order apparatus. When determining the priority of the additional information, the CPU 11 stores the creation order, the priority and the command information in association with the additional information in the additional information table 13a' as shown in FIG. 5 (step S212).

The additional information table 13a' is provided in the RAM 13. The additional information table 13a' provided in the RAM 13 clears the detailed information as the additional information stored whenever the IC card 1 is reset. In other words, if the additional information is desired to be reset whenever the IC card 1 is reset, the additional information table 13a' is provided in the RAM 13. The additional information table 13a' may be provided in the nonvolatile memory 16. The additional information table 13a' provided in the nonvolatile memory 16 holds the additional information even when the IC card 1 is powered off. The additional information table 13a' provided in the nonvolatile memory 16 holds the detailed information as additional information unless it is overwritten or deleted by a command. In other words, when the additional information is desired to be held even when the IC card 1 is reset, the additional information table 13a' is provided in the nonvolatile memory 16.

When storing the additional information in association with the priority, the command information and the creation order in the additional information table 13a', the CPU 11 generates response data in which information (code information) indicating a command processing result and information indicating the presence of additional information are set in the status word (SW) (step S213). When generating the response data in which the information indicating the presence of additional information is set, the CPU 11 transmits the generated response to the IC card processing apparatus 2 (step S214). After transmitting the response, the IC card 1 is allowed to receive a next command.

When determining that the command received in step S202 is the special command of requesting to read additional information (step S202, YES), the CPU 11 performs a processing of specifying additional information to be read from the additional information stored in the additional information table 13a' (step S221). The additional information to be read is determined based on the contents (parameter or reception timing) of the special command of requesting to read additional information.

The additional information table 13a' stores therein the creation order and the processing command information in association with the additional information. Thus, the special command of requesting to read additional information can designate specific additional information based on the creation order or the processing command information. The special command by which specific additional information is not designated may designate the latest additional information as additional information to be read. The special command may designate multiple items of additional information or designate all of the additional information. The CPU 11 determines that the special command is directed for reading multiple items of additional information or all of the additional information.

When specifying additional information to be read, the CPU 11 reads the specified additional information to be read from the additional information table 13a' (step S222), and generates response data in which the read additional information is set (step S223). When generating the response data in which the additional information to be read is set, the CPU 11 determines whether to delete or save the read additional information (step S224). Whether to delete the read additional information may be designated by the parameter of the special command or may be preset. For example, when being able to designate whether to delete the additional information read by the special command, the CPU 11 determines whether to delete the read additional information by the parameter of the received special commands.

When determining to delete the read additional information (step S224, YES), the CPU 11 deletes the read additional information from the additional information table 13a' (step S225). In this case, the CPU 11 updates the creation order of the additional information remaining in the additional information table 13a'. When the priority of additional information is determined depending on the occurrence frequency or the number of times of continuous occurrence, the contents of the additional information to be deleted from the additional information table 13a' may be stored in the storage area other than the additional information table 13a'. The additional information may be recorded in the additional information table 13a' in association with the fact that it has been deleted, instead of being completely deleted. The processings in steps S224 and S225 may be performed after the read additional information is set in the response data or after the response data is transmitted.

When setting the additional information to be read designated by the special command in the response data, the CPU 11 sets the status word indicating the success of the processing in the response data in which the additional information to be read is set (step S215), and transmits it as the response to the special command to the IC card processing apparatus 2 (step S214).

As described above, when additional information (detailed information) which cannot be indicated by the status word is present as the execution result of the processing command received from the high-order apparatus, the IC card according to the present embodiment generates additional information, determines a priority of the generated additional information, stores the determined priority in the additional information table in association with the additional information, and notifies a response indicating the presence of the additional information. When receiving the command while the additional information is being held in the additional information table, the IC card performs a processing corresponding to the priority of the additional information stored in the additional information table.

For example, when holding additional information having a higher priority than a predetermined threshold, even if receiving a command of requesting a normal processing, the IC card does not execute the command and transmits a response indicating the presence of the additional information. When holding additional information having a lower priority than the predetermined threshold, the IC card executes, when receiving a normal processing command, a command processing according to the command, and deletes the additional information having a low priority.

With the IC card 1 according to the third processing example, additional information (detailed information) indicating an event occurring during a command processing such as detailed information on error's contents can be efficiently notified to the high-order apparatus according to the priority of each additional information even in the existing command system.

The flow of the third processing example through the entire IC card processing system will be described below by way of example.

There will be first described a specific example of reading the latest additional information (detailed information) generated as a command execution result.

FIG. 14 is a sequence diagram showing a specific example of the processing of reading the latest additional information in the third processing example. FIG. 14 shows a sequence indicating a processing example when an error occurs in a writing command processing. The cause of error for the writing processing may be memory error, illegal attack, no authority to access or lowered operational voltage.

For example, it is assumed that when a writing command is received, if other logical channel is already occupying a file to be written, a writing error is caused due to no authority to access. In this case, the IC card 1 generates and holds the reason for the failed writing (that other logical channel is occupying the file to be accessed) as additional information. In this state, the IC card 1 returns a response in which the status word indicating "failed writing" and "with additional information" is set, and ends the processing for the received writing command. Thereafter, when receiving the special command of requesting additional information, the IC card 1 transmits additional information indicating the reason for the failed writing.

As shown in FIG. 2, it is assumed that applications A, B and files (EF) A1, A2, B1 are present in the IC card 1. The IC card 1 further assumes a state in which the logical channel "Ch. 0" sets file A1 to current as the access state by multiple logical channels managed by the logical channel managing function 42.

First, the IC card processing apparatus 2 as high-order apparatus transmits a command of requesting to open the logical channel (Ch. 1) and to select application A to the IC card 1 in preparation for writing data in file A1 within the IC card 1 (step S231). In response thereto, the IC card 1 performs the command processing of opening the logical channel (Ch. 1) and selecting application A. When successfully opening the logical channel (Ch. 1) and selecting application A, the IC card 1 transmits a response in which the status word indicating the success of the command processing is set to the IC card processing apparatus 2 (step S232).

When receiving the response indicating that the processing has been successfully performed for the command of requesting to open the logical channel (Ch. 1) and to select application A, the IC card processing apparatus 2 transmits a command of requesting to select file A1 to the IC card 1 (step S233). In response thereto, the IC card 1 performs a command processing of setting a current file in the logical channel (Ch. 1) for file A1. When successfully performing the processing of setting the current file in the logical channel (Ch. 1) for file A1, the IC card 1 transmits a response in which the status word indicating the success of the command processing is set to the IC card processing apparatus 2 (step S234).

When receiving the response indicating that the processing has been successfully performed for the command of requesting to select file A1, the IC card processing apparatus 2 transmits a writing command of requesting to write data in file A1 to the IC card 1 (step S235). The writing command is configured with a CASE3 format. In response thereto, the IC card 1 performs a writing processing for the writing command (step S236).

In the processing for the writing command, the CPU 11 of the IC card 1 first confirms the authority to access file A1 set as current file (step S236-1). The processing for the writing command is such that the logical channel "Ch. 1" writes data in file A1 as current file. The IC card 1 sets file A1 as current file in the logical channel "Ch. 0." Thus, the CPU 11 of the IC card 1 determines that the logical channel "Ch. 1" has no authority to write data in file A1 (step S236-2). Based on the determination of no authority to write, the CPU 11 of the IC card 1 does not perform but interrupts the data writing processing requested by the command (step S236-3).

When interrupting the commands processing corresponding to the received writing command, the CPU 11 of the IC card 1 generates additional information (detailed information) indicating a detailed reason for the interrupted command processing (step S236-4). The reason for the interrupted command processing (detailed information on error's contents) is that the logical channel "Ch. 0" is already accessing file A1. Therefore, the CPU 11 of the IC card 1 generates additional information indicating the reason for the interrupted command processing (such as that "writing fails in the logical channel "Ch. 1" since the logical channel "Ch. 0" is accessing file A1" or that "the access priority of the logical channel (Ch. 1) to file A1 is the second").

When generating the additional information, the CPU 11 determines the priority of the generated additional information (step S236-5). Here, the additional information is that "the logical channel "Ch. 1" cannot write since the logical channel "Ch. 0" is accessing file A1." In the example shown in FIG. 12, the priority of the additional information is set to "2."

When determining the priority of the generated additional information, the CPU 11 stores the generated additional information in the additional information table 13a' in association with the priority ("2"), the command information (part of the writing command (00h D0h 00h 00h 10h 11h 12h)) and the creation order ("1") (step S236-6).

When storing the latest additional information in the additional information table 13a', the CPU 11 of the IC card 1 creates a response in which the status word indicating the code information of "writing error" and indicating "with additional information" is set (step S236-7). When creating the response in which the status word indicating "writing error" and "with additional information" is set, the CPU 11 of the IC card 1 transmits the created response to the IC card processing apparatus 2 (step S237) and ends the processing for the writing command.

When receiving the response indicating the presence of additional information, the IC card processing apparatus 2 determines whether the additional information is necessary immediately. The necessity of additional information may be preset or may be selected by the operator of the IC card processing apparatus 2 as needed. The IC card processing apparatus 2 determines a command to be next supplied to the IC card 1 based on the determination result of the necessity of additional information. The IC card processing apparatus 2 requests the IC card 1 to immediately read the latest additional information.

When determining that the latest additional information is necessary, the IC card processing apparatus 2 transmits the special command (such as GET RESPONSE command of CASE2) of requesting to read additional information designating the latest additional information to the IC card 1 (step S238). When specific additional information is not designated, the special command may determine that the latest additional information is additional information to be read. The special command may designate the latest additional information by designating the creation order of "1" or designating the processing command information (here, writing command) by which the latest additional information is generated. The IC card processing apparatus 2 which has received the response indicating the presence of additional information requests to read the latest additional information by a special command by which specific additional information is not designated.

If the special command does not designate additional information, the CPU 11 of the IC card 1 which has received the special command determines that the special command is of requesting to read the latest additional information. Based on this determination, the CPU 11 of the IC card 1 reads the latest additional information (additional information having the latest creation order) from the additional information table 13a', and sets it in response data (step S239). When setting the latest additional information in the response data, the CPU 11 of the IC card 1 transmits the response data to the IC card processing apparatus 2 (step S240).

As described above, when the special command of requesting to read additional information does not designate specific additional information, the IC card can transmit the latest additional information stored in the additional information table as a response. The read latest additional information may be deleted or saved. For example, when designating whether to delete the read additional information by the special command, the CPU 11 of the IC card 1 deletes or stores the read additional information based on the designation by the special command.

There will be described below a processing example when the additional information table 13a' stores therein additional information having a high priority.

FIG. 15 is a sequence diagram showing a processing example for a command received from the IC card processing apparatus 2 while the additional information table 13a' stores therein additional information having a high priority.

It is assumed that the additional information table 13a' stores therein additional information having a priority of "5" in five levels. In this state, the IC card processing apparatus 2 provides a command of requesting a processing not relating to additional information (normal command other than the special command) (GET CHALLENGE command of CASE 2 in the example of FIG. 15) to the IC card 1 (step S241).

The IC card 1 which has received the normal command confirms whether additional information having a high priority is present in the additional information table 13a'. The CPU 11 confirms that the additional information having a high priority (priority of "5") is stored in the additional information table 13a' (step S242-1). Thus, the CPU 11 of the IC card 1 creates response data for requesting to read additional information instead of performing the processing requested by the command (step S242-2). For example, the CPU 11 of the IC card 1 creates response data in which the status word indicating a processing failure and the presence of additional information is set, and transmits it to the IC card processing apparatus 2 (step S243).

In this case, the IC card 1 does not perform a normal command until it reads the additional information in response to the request from the IC card processing apparatus 2 as high-order apparatus. In other words, the 1C card processing apparatus 2 cannot perform a normal command until it reads the additional information having a high priority from the IC card 1. Therefore, the IC card processing apparatus 2 transmits the special command of requesting to read additional information (GET RESPONSE command of CASE2 in the example shown in FIG. 15) to the IC card 1 (step S251).

The special command may designate additional information to be read by the creation order or the priority. When additional information to be read is not designated, the additional information notified by the immediately-previous response data may be read.

The special command can designate not only one item of additional information but also multiple items of additional information for reading, or can designate all of the additional information stored in the additional information table 13a' for reading.

The special command of requesting to read additional information can designate whether to delete or hold the read additional information by parameter setting. In the example shown in FIG. 15, the special command of designating additional information designates to delete the read additional information. In other words, in the processing example shown in FIG. 15, the read additional information is deleted. Even in this case, when the priority of the additional information is determined based on the occurrence frequency or the number of times of continuous occurrence, the additional information is not completely deleted and the contents of the additional information are separately recorded.

The CPU 11 of the IC card 1 which has received the special command reads additional information to be read from the additional information table 13a' (step S252-1), and creates response data in which the read additional information is set (step S252-2). When setting the additional information in the response data, the CPU 11 deletes the additional information from the additional information table 13a' (step S252-3). When setting the additional information designated by the special command in the response data, the CPU 11 of the IC card 1 sets the status word indicating the normal ending of the processing in the response data and transmits it to the IC card processing apparatus 2 (step S253).

After receiving the response data containing the additional information, the IC card processing apparatus 2 provides a command of requesting a processing not relating to additional information (normal command other than the special command) (GET CHALLENGE command of CASE2 in the example of FIG. 15) to the IC card 1 (step S261). When receiving the normal command, the IC card 1 confirms whether additional information having a high priority is present in the additional information table 13a'.

Since the additional information having a high priority (priority of "5") is deleted, the CPU 11 confirms that the additional information having a high priority is not stored in the additional information table 13a' (step S262-1). In this case, the CPU 11 of the IC card 1 performs a command processing according to the contents of the command (step S262-2). When normally performing the command processing, the CPU 11 of the IC card 1 creates, as the command processing result, response data in which a random number generated by the command processing and the status word indicating the normal ending of the processing are set, and transmits it to the IC card processing apparatus 2 (step S263).

As described above, the IC card according to the third processing example is configured to store detailed information indicating an event such as error occurring while the command processing is being executed in association with a priority of the detailed information, to output the detailed information when receiving a special command of requesting to read the detailed information, and to perform a processing according to the priority of the detailed information when receiving a command other than the special command. According to the third processing example, the IC card can provide additional information (detailed information) occurring in the command processing to the high-order apparatus through efficient processings according to the priority.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable electronic apparatus (1) **characterized by** comprising:
a communicating unit (14) configured to communicate with an external apparatus;
an executing unit (S13, S113, S207) configured to execute a command processing According to a command received from the external apparatus by the communicating unit;
a generating unit (S17, S117, S209) configured to generate additional information associated with a result of the command processing executed by the executing unit;
a storing unit (13, 13a, 13a', S18, S119-S122, S210-S212) configured to store the additional information generated by the generating unit;
a first processing unit (S19 and S16, S123 and S116, S213 and S214) configured to transmit a response containing the result of the command processing by the executing unit and information indicating presence of the additional information to the external apparatus, if the storing unit stores the additional information generated by the generating unit; and
a second processing unit (S20 and S16, S127 and S116, S223 and S214) configured to transmit the additional information stored in the storing unit to the external apparatus, if receiving a command of requesting the additional information from the external apparatus.

2. The portable electronic apparatus according to claim 1, **characterized in that** the generating unit (S17) generates additional information indicating contents of the error in the command processing, if an error occurs in the command processing executed by the executing unit, and
the first processing unit (S19 and S16) transmits a response containing information indicating that an error has occurred in the command processing by the executing unit and information indicating the presence of the additional information to the external apparatus.

3. The portable electronic apparatus according to claim 1 or 2, **characterized in that** the second processing unit (S20 and S16) transmits the additional information to the external apparatus after the first processing unit transmits the response containing the information indicating the presence of the additional information, if a command to be next received is a command of requesting the additional information.

4. The portable electronic apparatus according to any one of claims 1 to 3, **characterized by** further comprising:
a memory (16) configured to store data,
wherein the generating unit (S17) generates additional information indicating detailed contents of the error, if an error occurs in a writing processing corresponding to a writing command of requesting to write data in the memory, and
the first processing unit (S19 and S16) transmits a response containing information indicating that an error has occurred in the writing processing by the executing unit and information indicating the presence of the additional information to the external apparatus.

5. The portable electronic apparatus according to claim 1, **characterized in that** the storing unit (13a, 13a', S119-S122, S210-S212) stores therein a plurality of items of detailed information generated by the generating unit, and
when receiving a command of requesting the additional information, the second processing unit (S127 and S116, S223 and S214) specifies one item of additional information to be transmitted to the external apparatus from among the additional information stored in the storing unit, and transmits the specified additional information to the external apparatus.

6. The portable electronic apparatus according to claim 5, **characterized in that** the second processing unit (S127 and S116) specifies the latest additional information stored in the storing unit as additional information to be transmitted, if the command of requesting the additional information does not contain information for designating additional information.

7. The portable electronic apparatus according to claim 5 or 6, **characterized in that** the storing unit (13a, S119-S122) stores additional information generated by the generating unit in association with information indicating the processing command of generating the additional information, and
the second processing unit (S127 and S116) specifies additional information stored in the storing unit in association with the designated command as additional information to be transmitted, if a processing command of generating additional information to be transmitted is designated by the command of requesting the additional information.

8. The portable electronic apparatus according to any one of claims 1 to 7, **characterized by** further comprising:
a deleting unit (S129) configured to delete, from the storing unit, additional information transmitted by the second processing unit.

9. The portable electronic apparatus according to claim 1, **characterized by** further comprising:
a type determining unit (S211) configured to determine a type of additional information generated by the generating unit; and
an additional information processing unit (S203-S206) configured to process additional information stored in the storing unit according to a type of the additional information, if receiving a command other than the command of requesting additional information,
wherein the storing unit (13a', S210-S212) stores the additional information in association with the type of the additional information.

10. The portable electronic apparatus according to claim 9, **characterized in that** the additional information processing unit (S203-S206) performs only a processing of notifying that the additional information is present by the first processing unit (S213-S214) as a processing for the command received from the external apparatus, if a type of additional information stored in the storing unit is to be surely notified to the external apparatus.

11. The portable electronic apparatus according to claim 9 or 10, **characterized in that** the additional information processing unit (S203-S206) deletes the additional information as a processing for the command received from the external apparatus, if a type of additional information stored in the storing unit is to be optionally notified to the external apparatus.

12. The portable electronic apparatus according to any one of claims 9 to 11, **characterized in that** the type determining unit (S211) determines a priority indicating necessity of notifying the additional information to the external apparatus as the type of the additional information, and
the additional information processing unit (S203-S206) determines processing contents of the additional information stored in the storing unit according to the priority.

13. The portable electronic apparatus according to claim 12, **characterized in that** the type determining unit (S211) enhances the priority of the additional information, if additional information having the same contents is stored in the storing unit.

14. An IC card (1) **characterized by** comprising:
an module (Ca) comprising structural elements of the mobile electronic device as defined in any one of claims 1 through 13; and
an main body (C) which contains the module.

15. A method of controlling a portable electronic apparatus, the method being used for a portable electronic apparatus that processes a command supplied from an external apparatus, **characterized by** comprising:
executing (S13, S113, S207) a command processing according to a command received from the external apparatus;
generating (S17, S117, S209) additional information for a result of the command processing according to the result of the executed command processing;
storing (S18, S119-S122, S210-S212) the generated additional information;
transmitting (S19 and S16, S123 and S116, S213 and S214) a response containing the result of the executed command processing and information indicating the presence of the additional information to the external apparatus, if storing the generated additional information; and
transmitting (S20 and S16, S127 and S116, S223 and S214) the additional information to the external apparatus, if receiving a command of requesting the additional information from the external apparatus.
